# EUROPEAN PATENT APPLICATION

(11) **EP 3 035 695 A1**
(43) Date of publication of application: **22.06.2016**
(21) Application number: 14307060.5
(22) Date of filing: 17.12.2014
(51) Int. Cl.: H04N 21/462, H04N 21/475, H04N 21/488

(54) **Controlling the selection of an input signal to display at a multiple input display device**

(71) Applicant: ALCATEL LUCENT, 92100 Boulogne-Billancourt (FR)
(72) Inventor: Karunamurthy, Jagannath, 600096 Chennai (IN); Thiagarajan, Asha, 600096 Chennai (IN); Rajagopalan, Ramakrishnan, 600096 Chennai (IN)
(74) Representative: Mills, Julia

(57) **Abstract**

A method performed at a processing device, the processing device being configured to output signals to a display device that is configured to display signals received from one of a plurality of processing devices. The method comprises: when not currently outputting signals to the display device, determining that an output signal in which a user of the display device has indicated an interest is to be available to be output by the processing device; and transmitting a notifying signal to the display device, the notifying signal instructing the display device to switch to displaying signals received at an input receiving signals from the processing device.

## Description

### FIELD OF THE INVENTION

The invention relates to display devices such as televisions which receive input signals for display from multiple devices.

### BACKGROUND

Display devices such as televisions are increasingly used with a plurality of different processing devices which transmit signals to the television for display. Thus, where previously a television was configured to receive and display a broadcast signal transmitted on a channel to which it was tuned, the television may now have a plurality of different inputs, such as HDM1, HDMI2, s-video and VGA each of which may be connected to a processing device capable of transmitting a signal for display to the television. Although this arrangement increases the flexibility of the television and allows a single display to be used with multiple devices, problems can arise where a signal in which a user has previously expressed an interest becomes available on a device that is not currently being viewed. In this case the user will be unaware of the availability of the signal and may miss their chance to view it.

For example, where one of the inputs to a television is a set-top box and the user has seen that a programme in which he is interested is to be broadcast at a scheduled time, he may set a reminder for that programme, such that at a certain time prior to the scheduled broadcast time a reminder to switch to that programme is displayed on the television. This works fine where the television is currently showing signals received from the set-top box, but where it is being used to display signals from another device, such as a gaming console, then the reminder will not be displayed at the television and the user will miss the opportunity to view the programme.

It would be desirable to avoid or at least reduce the frequency that a user is not made aware of the availability of a signal in which he has expressed an interest.

### SUMMARY

A first aspect of the present invention provides a method performed at a processing device, said processing device being configured to output signals to a display device that is configured to display signals received from one of a plurality of processing devices, said method comprising: when not currently outputting signals to said display device, determining that an output signal in which a user of said display device has indicated an interest is to be available to be output by said processing device; and transmitting a notifying signal to said display device said notifying signal instructing said display device to switch to displaying signals received at an input receiving signals from said processing device.

The inventors of the present invention recognised that increasingly displays are used to display signals from more than one device and where the display is not currently receiving and displaying a signal from a particular device, then any notification signals that may have been scheduled to be sent from that device to notify the user of the availability of a signal in which the user is interested, such as a reminder for an upcoming programme will not be displayed by a conventional display. It has addressed this problem by amending such notifying signals to signals that instruct the display to switch to "this" input i.e. to switch to the input to which that device sends signals and in this way the probability that the user misses such a notification is reduced.

In some circumstances, it maybe advantageous if a confirmation request is sent before switching, such that the display displays a request for confirmation from the user prior to switching inputs. In this regard the user may indicate that he wishes a confirmation to be included, or the device may be configured to require confirmation for such notifying signals. This displayed confirmation request may take a number of forms, it may simply be a "switch to particular device?" query or it may contain information regarding the available output signal in which the user had expressed an interest, e.g. "switch to view programme X?" and it may contain further options to "yes" or "no" such as "snooze", i.e. remind me again in a predetermined time, or "remind for a later version of the programme". In the latter two cases, the display device will transmit the user information to the processing device which will update the reminder accordingly and send a new notifying signal with confirmation request at a later point. In any case, the display will indicate that a confirmation is required from the user and only in response to the user confirming that he does indeed wish the display to switch inputs will the display actually switch inputs.

In some embodiments, said method further comprises at a predetermined time before said output signal is to be available, transmitting a confirmation request instructing said display to display a request for confirmation from said user as to whether said display device should switch to display said output signal that is to be available; and in response to receiving a confirmation from said display device performing said steps of said first aspect.

It may be that the processing device is configured to request confirmation and in such a case it may transmit a confirmation request at a predetermined time before the output signal is to be available. In some embodiments, it will then, following receipt of the confirmation from a user transmit the notifying signal instructing the display to switch to displaying signals from this device at the time that the output signal is available.

In other embodiments, the notifying signal instructing the display to switch inputs and the confirmation signal may be combined. In these embodiments said notifying signal includes a confirmation request instructing said display to display a request for confirmation from said user as to whether said display device should switch to display said available output signal, said notifying signal instructing said display device to switch to said input receiving signals from said processing device on receipt of confirmation of said switch from said user.

In this case the confirmation from the user acts as the trigger for the display to switch inputs. The display will also transmit the user response to the processing device such that it knows whether it should output the available signal or not. This latter embodiment may be appropriate for cases where the signal of interest is available when the confirmation request is sent, which may be the case for downloaded data, for example. In such a case, as the output signal is available when the confirmation request is transmitted then it may be advantageous if the input from the the user indicating that he wishes to switch to this device actually triggers this switch.

The confirmation may be input by the user using the remote control device for the display for example. In any case, the user input is received at the display and an indication of this response is then sent to the processing device.

In some embodiments, the method comprises a further step of receiving an indication from said display, of a user input received at said display in response to display of said confirmation request.

Where the output device has transmitted a notifying signal with a confirmation request, it may not output the output signal in which the user has expressed an interest until it has received an indication from the display of the user response to the confirmation request. Where this indication indicates confirmation of the switch then the output device will output the available output signal in which the user had expressed an interest once it is available. Where the confirmation signal was not configured to control the display to switch to this input, then at the time that the output signal is available a notifying signal instructing the display to switch will be sent.

In some embodiments, said method comprises an initial step of receiving a reminder request from said user requesting notification of said availability of said output signal in which said user is interested.

The processing device that is notifying the display device of the availability of a signal in which the user is interested, may be aware of this due to an input received from the user, that in some cases may be a reminder request requesting that the user be reminded when the signal of interest is to be available, perhaps at a certain time before the time that it is available or in other cases at or just after the time when it becomes available.

In some embodiments, said processing device comprises a device for receiving a plurality of television programmes and for outputting a selected programme to said display, and said reminder request comprises a reminder request for a television programme that is scheduled to be broadcast at a predetermined time.

Where the processing device is a device for receiving a plurality of television programmes such as for example a set-top box, then the reminder request may be a reminder for a particular television programme that is scheduled to be broadcast that the user has indicated an interest in.

In the case, that confirmation is enabled the determining step may determine when it is a predetermined time before this programme is scheduled to be broadcast, whereupon a notifying signal will be transmitted to the display device instructing the display device to display a confirmation request. In some cases the notifying signal may include details of the programme for which the reminder has been set such that the confirmation request that is displayed will include this information. This may be advantageous and help the user in his confirmation choice. If the user does confirm the switch, a notifying signal instructing switching to this input will be transmitted to the display device at or close to the scheduled time of the programme and the output of the processing device will be switched to output this programme. If no confirmation was enabled then the switch to this interface signal will be sent without a confirmation request, either at the time that the reminder is scheduled for, that is a predetermined time before the programme or at the scheduled time of the programme depending on the configuration.

In some embodiments, said processing device is configured to download data that is to be output and said step of determining comprises determining that said download is complete.

In some case, the user may have indicated an interest in a signal by requesting download of data onto the processing device. During the download he may have switched the display to view an output signal from a different processing device. It may be advantageous for him to know when the download of data is complete and thus, in some embodiments the output device will, on determining that the download is complete, transmit a notifying signal to the display device instructing the display device to switch to this output device. In this regard, where the instructing signal comes with a confirmation request, then the display device will only switch if the user confirms that it wishes to switch to this display device now that the download is complete.

In some embodiments, said processing device is a gaming console and said step of receiving said reminder request comprises receiving said reminder request from said user requesting a reminder for a game scheduled to be played at a predetermined time; and said determining step comprises determining that a current time is a set time before said predetermined time.

In some cases the output device may be a gaming console and in the case that the user has scheduled a game perhaps with another user and set a reminder to that effect, it is advantageous if this information can be indicated to the user where the gaming console is no longer the processing device that the display device is displaying. In such a case, when the determining step performed at the gaming console determines that it is a set time before the predetermined time that the game is scheduled for, then the notifying signal instructing the display device to switch to this output device is transmitted. In this way, the user will not miss the scheduled game.

A second aspect of the present invention provides a method performed at a display device configured to display signals received from one of a plurality of processing devices, said method comprising: receiving, from one of said plurality of processing devices that said display device is not currently displaying a signal from, a notifying signal notifying said display device of an availability of a signal in which a user of said display device has indicated an interest; and in response to said notifying signal performing at least one of: switching an input interface at said display device to said one of said plurality of processing devices; and displaying a request for confirmation from said user as to whether said display device should switch inputs to display said available output signal.

A display device that is configured to display signals from multiple processing devices may miss notifications or reminders that are transmitted from a processing device where it is not currently displaying signals from this device. In order to address this problem, a display will respond to a notifying signal from an output or processing device which it is not currently displaying signals from, by either switching an input interface at the display device to the output device from which it has received the notifying signal or by displaying a request for confirmation to the user as to whether the device should switch inputs to display this available output signal. In the case that it displays a confirmation request, it may in some cases display an indication of the availability of the output signal as part of the confirmation request, such that the user is aware of why the display is suggesting that it might wish to switch to this other processing device. In other cases, the displays may simply display a confirmation request requesting confirmation as to whether it should switch to a particular device.

In some embodiments, said notifying signal comprises a switch to interface with confirmation signal and said method comprises: performing said displaying step and on receiving an input from said user; forwarding said received user input to said one of said plurality of processing devices.

Where the notifying signal comprises a request for confirmation, then in response to receiving an input from the user, the method will forward the received user input to the processing device. In some embodiments where the user input indicates confirmation the display will switch the input interface such that the display displays signals received from the processing device that transmitted the notifying signal, while in others it will not switch inputs until it receives a further notifying signal instructing it to switch inputs which the processing device will send in response to receipt of the user confirmation and to determining that the output of interest to the user is available.

In some embodiments, the method comprises displaying a signal received from a further one of said plurality of processing devices when said step of receiving said notifying signal is performed.

Although, the display device may be in standby and displaying no signals when receiving a notifying signal in some embodiments it may be displaying a signal from a different processing device when the notifying signal is received.

A third aspect of the present invention provides a computer program which when executed by a computer is operable to control said computer to perform steps according to said method of a first aspect or a second aspect of the present invention.

A fourth aspect of the present invention provides a processing device for outputting signals for display at a display device configured to display signals received from one of a plurality of processing devices, said processing device comprising: output circuitry for outputting signals to said display device; input circuitry for receiving user inputs indicating an interest in at least one signal to be output to said display device by said processing device; determining circuitry configured when said processing device is not currently outputting signals to said display device, to determine when an output signal in which said user of said display device has indicated an interest is to be available to be output by said processing device; wherein said output circuitry is configured to respond to said determining circuitry determining an availability of said output signal to transmit a notifying signal to said display device notifying said display device of said availability of said output signal.

Although the processing device may comprise any output device which transmits signals to a display for display, in some embodiments the processing device comprises one of a set-top box, a gaming console, a computing device such as a personal computer, and a digital multimedia player.

A fifth aspect of the present device comprises a display device configured to display signals received from one of a plurality of processing devices, said display device comprising: an input for receiving a notifying signal from one of said plurality of processing devices that said display device is not currently displaying a signal from, said notifying signal notifying said display device of an availability of a signal in which a user of said display device has indicated an interest; and control logic configured in response to said notifying signal to send a control signal to at least one of switching logic and display logic; said switching logic being logic configured to respond to said control signal by switching an input interface at said display device to receive a signal from said one of said plurality of processing devices; and said display logic being configured to respond to said control signal to display a request for confirmation from said user as to whether said display device should switch inputs to display said available output signal.

In some embodiments, the display device further comprises user input logic for receiving a user input in response to said display of said confirmation request; and transmission logic configured to transmit said user input to said one of said plurality of processing devices.

In some embodiments, said display device further comprises user input logic for receiving a user input in response to said display of said confirmation request; and transmission logic configured to transmit said user input to said one of said plurality of processing devices.

Although the display device may comprise a number of different sorts of display equipment, in some embodiments it comprises a television set configured to receive signals from a plurality of different inputs.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 shows a flow diagram illustrating steps performed on a processing device such as a set-top box according to an embodiment;
Figure 2 shows steps in a method performed at a display device according to an embodiment;
Figure 3 shows the plurality of processing devices connected to a display device according to an embodiment;
Figure 4 shows an example programme guide displayed by a display device connected to a set-top box according to an embodiment;
Figure 5 schematically shows how a reminder is set up on a set-top box displaying an electronic programming guide according to an embodiment;
Figure 6 shows a list displaying reminders that have been set up on the set-top box according to an embodiment; and
Figure 7 shows a flowchart illustrating steps in a method performed at both the processing device connected to the display device according to an embodiment.

### DESCRIPTION OF THE EMBODIMENTS

Before discussing the embodiments in any more detail, first an overview will be provided.

A user may set a reminder for a TV program in a digital environment by selecting the appropriate programs in the Set-top-box's EPG perhaps using a remote control or by other means such as mobile phone/Internet reminders (as available) and by marking the program to indicate to the set-top box to activate that channel as a reminder at an appropriate time before the programme is scheduled. This will not be effective if the Television is using other interfaces and displaying outputs from other devices such as a movie from a Blu-ray® player or a game from a console or the user is using Smart TV apps or using a PC interface to browse.

The idea to address this problem is that when a reminder is activated on one of the devices connected to the TV; the TV is switched automatically to that interface. i.e., when a STB is activated for a channel, the STB should also send a SWITCH-TO-THIS-INTERFACE (STTI) signal to the connected interface. When a Television receives a STTI signal from any of the connected interface, then the TV should be activated for that interface.

The switch to this interface signal may simply be an instruction to the display to switch to the input from which this signal has been received. Alternatively, it may be a switch to this interface with confirmation signal, in which case the TV will not switch until the user has confirmed that he does indeed want to switch. In such a case the confirmation request may simply indicate the device to be switched to, or it may provide information regarding the reason, e.g. details of the programme that a reminder has been set for.

In some cases, a notifying STTI signal may be sent not in response to a reminder but in response to another event that indicates that a signal in which a user has expressed an interest is to be available. For example, where a user is downloading data, for example a film or a game, then during the download he may switch to view another device, however when the download is complete he may wish to switch back to the original device. Thus, in some cases the download being complete will trigger a notifying STTI signal to be sent to the display, either with or without a confirmation request. The user is then aware that the download is complete.

Another example of an event that may trigger such a notifying STTI signal is a game scheduled on a game console at a certain time.

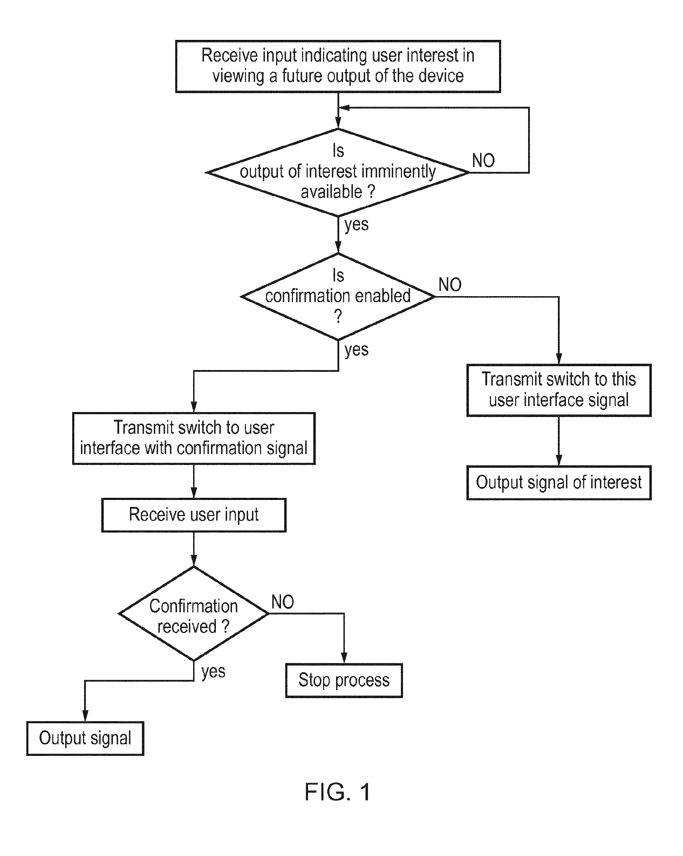

Figure 1 shows a flow diagram illustrating steps in a method performed at a processing or output device that outputs signals for display to one of multiple inputs of a display device according to an embodiment. In a first step, the processing device receives an input from a user indicating the user's interest in viewing some future output of the device. This user input may in the form of a reminder request for the processing device to remind the user of a forthcoming event, such as the broadcast of a scheduled programme where the device is a set-top box for example, or a scheduled game where the device is a gaming console and the user has scheduled a game with another user. Alternatively, the input from the user may be a request to download data; this request may be viewed as an indication that the user will later wish to view or execute this downloaded data and should be notified when the download is complete.

On receipt of this user input the device will determine if the output indicated to be of interest is imminently available and when it determines that it is, perhaps at a predetermined time before the scheduled time or perhaps on detection that the download has completed, then it will determine if confirmation is currently enabled at the device. If it is not currently enabled, then it will transmit a switch to this user interface signal to the display device indicating to the display device that it should switch to displaying a signal from this device. Following this the processing device should output the signal of interest.

If confirmation is enabled then the processing device will transmit a switch to user interface with confirmation signal and this indicates to the display device that it should display a confirmation request to the user requesting the user to confirm whether or not they wish to switch to viewing signals from this device. The display device may receive a user input in response to this and will transmit this to the processing device which on receipt of the user input will determine whether or not the user input confirmed the device switch or not. If the user does not wish to switch to view output from this device, then the device will abort the process and not proceed to output the signal. If however the user has confirmed that it would like to view output from this device, then the processing device will proceed to output the signal. In some cases prior to outputting the signal it will transmit a switch to this interface signal controlling the display to switch to this input, while in others the switch to interface with confirmation signal will have instructed the display to switch on receipt of the user confirmation.

In the case that the signal of interest was a scheduled programme, then the set top box will switch to the channel that broadcasts this programme at the scheduled time and the programme will be output. Where it was a scheduled game, then the gaming console will initiate the game and where it was a download that had completed, then the device will indicate to the user that this download has completed and will request an input from the user to review or execute the downloaded data.

The method steps shown in figure 1 that are executed at a processing device may be controlled by software that has been downloaded onto the device. The device may be configured with this software when it is manufactured, or it may be updated with it later, in order to allow it to be used with multiple input display devices without output signals of interest to a user being missed.

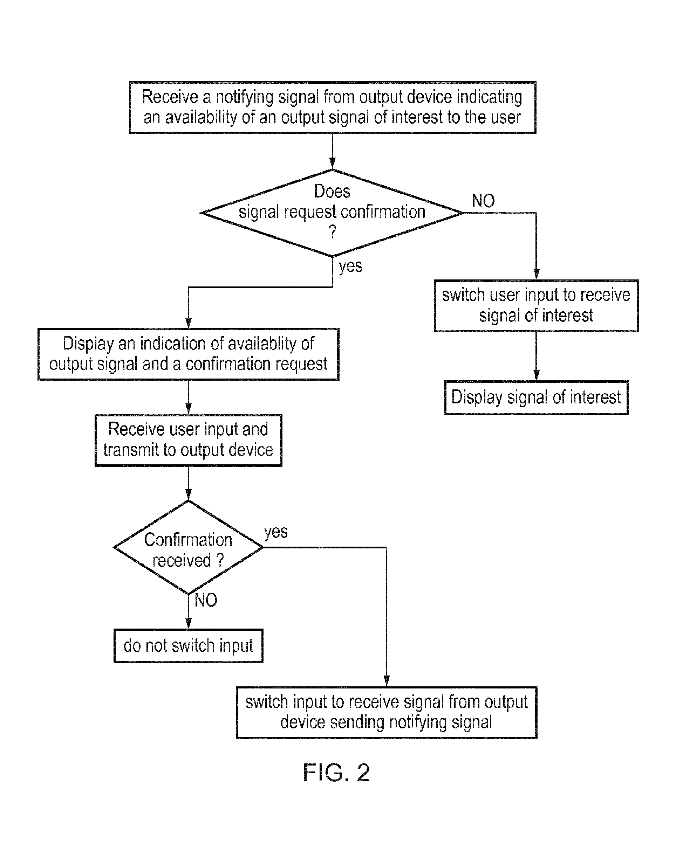

Figure 2 shows steps performed on a display device according to an embodiment. The display device may be configured at manufacture to perform these steps or it may perform them in response to software downloaded onto the display device in an update procedure.

The initial step involves the display device receiving a notifying signal from an output or processing device that is performing a method according to an embodiment of Figure 1. This notifying signal indicates an availability of an output signal that is of interest to the user. The display device determines whether the signal requests confirmation and if it does not it will switch the user input to receive signals from that output device, allowing the signals of interest to be viewed.

If the signal does request confirmation, then it will display a request for confirmation. The request for confirmation may include an indication of the output signal that is available or it may simply request confirmation to switch to a particular device. A user input will be received at the display device in response to this confirmation request and this will be transmitted to the device sending the notifying signal.

In some embodiments the display device will determine whether the user confirmation input confirmed the switch or not and if it did then the display device will switch input such that it receives signals from the output device from which it received the notifying signal. In others it will await a further notifying signal from the processing device indicating that it should switch inputs before switching inputs.

If the user has not confirmed that it wishes to switch, then it will not switch input and will continue to display the signals from the output device from which it previously received signals or where it had been in standby mode, it will return to standby mode. It should be noted that the display device can be configured with a default option such that if the user does not respond to the confirmation request within a certain time, then it is assumed either that he does not wish to switch device or that he does depending on the default selected.

As noted above as Technology evolves, consumers tend to integrate more than one device to their display devices such as Television sets. Some examples of such devices are:
(i) Set-top-boxes - STBs for digitally viewing all the channels,
(ii) Digital multimedia player - such as Blu-ray BR & DVD players.
(iii) Gaming consoles - for playing games,
(iv) Computers and many more

In an embodiment a user when digitally viewing channels using an STB may set reminders for particular programmes in which he is interested through an EPG or Electronic program guides. EPGs or interactive program guides provide Television users with continuously updated menus displaying broadcast programmes or scheduling information for current and upcoming programmes. Some guides also feature backward scrolling to promote their catch up content. In general, EPGs lists all the available programmes from the database of the Service Provider consisting of Programme Name, Channel Name (and/or Channel number), Start Date &Time, Runtime and such information.

A user sets a reminder on the STB using the EPG to remind him of a programme in which he is interested. When the time indicated in the reminder request arrives the STB will switch the channel accordingly and if the TV is not activated for that interface a Switch-To-This-Interface (STTI) kind of signal is sent to the TV, which will be switched to this interface automatically. By this method, reminders are activated both on STB and TV simultaneously.

This can be explained with the illustrated examples.

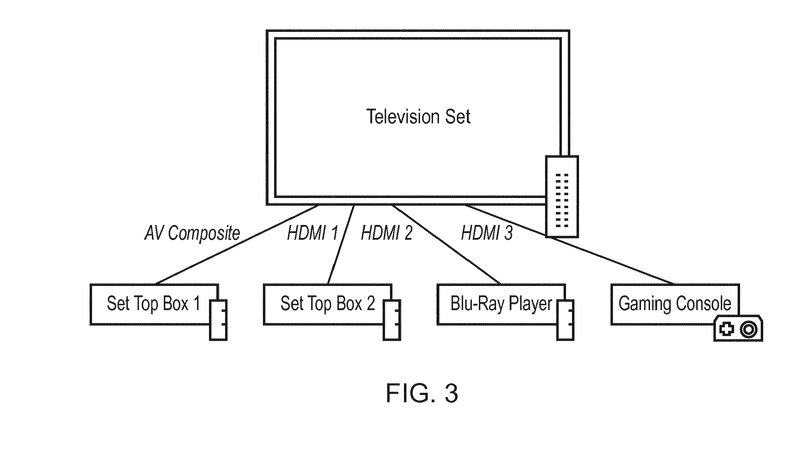

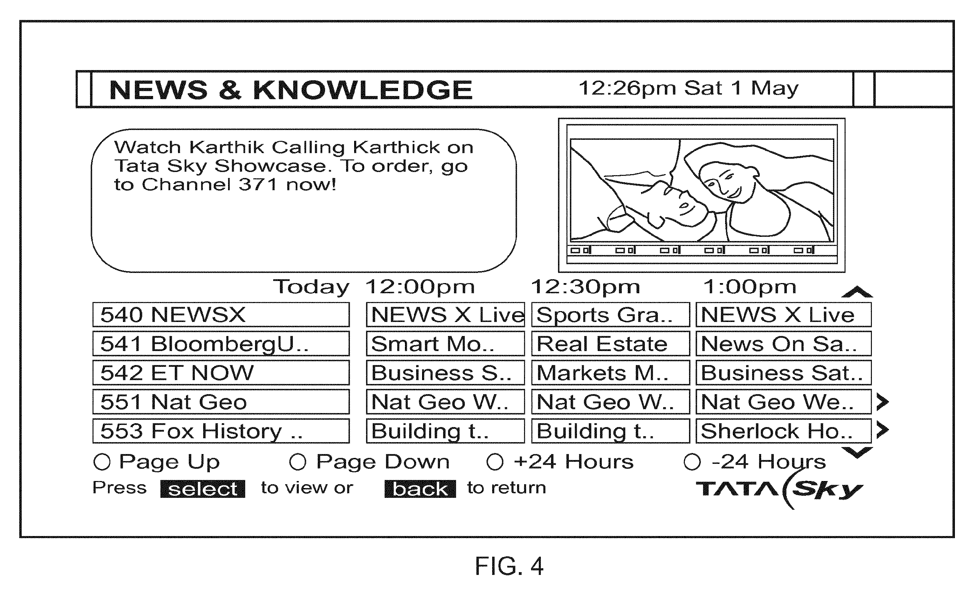

Figure 3 depicts the basic scenario of a user having a TV connected to a variety of devices such as STB1, STB2, BR player and a Gaming console. On one of the connected STBs, a user is watching the EPG lists available as shown in Figure 4, the list contains information such as Channel Name, Channel Number and Program Name on the time calendar displaying both start time and runtime of the program.

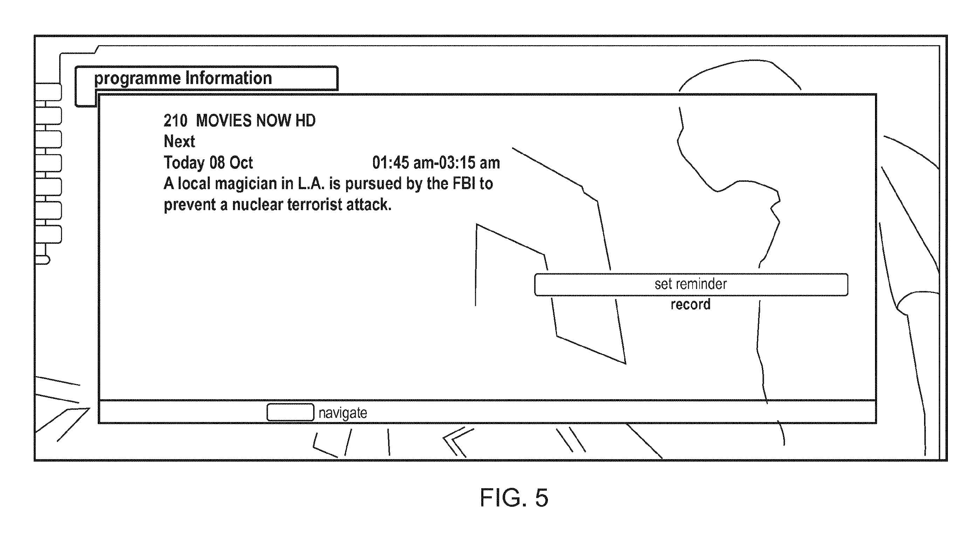

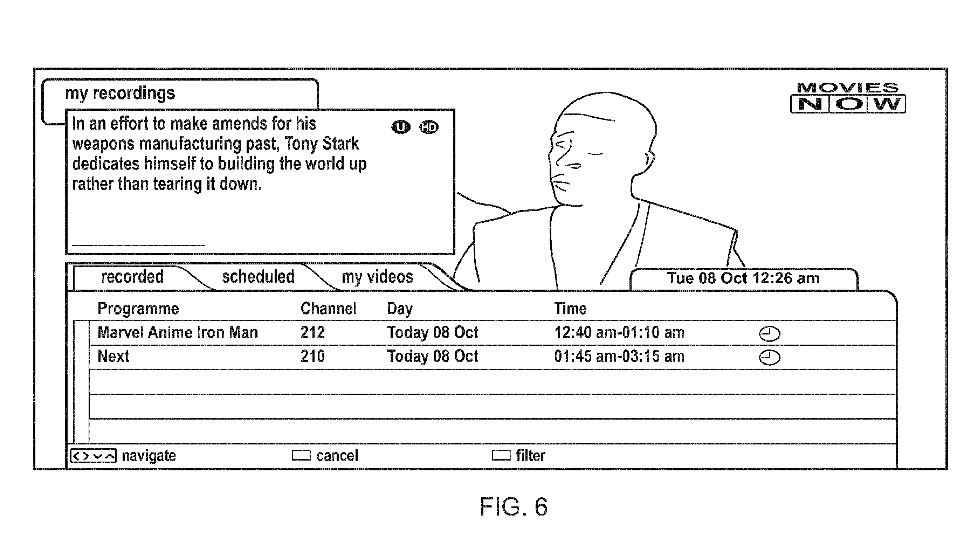

Based on the EPG generated from the server, on a local STB, a programme is marked and set as a reminder, Figure 5 and Figure 6 showing a screenshot of the application running on the STB to set a programme as reminder and displaying the list of Reminders correspondingly.

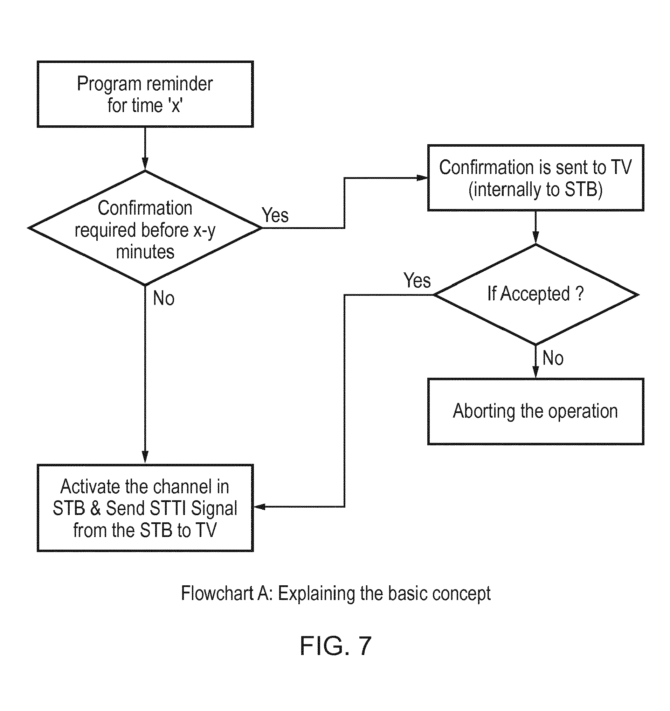

Figure 7 shows a flowchart, flowchart A, indicating how the above functions:
Initially a user sets a reminder for a programme at time xx:xx hours and if the confirmation is enabled by the system/user then at y minutes before the time the system will ask for confirmation to switch to that channel.

If the confirmation is enabled, then a confirmation message will be asked with Yes/No option to activate the reminder. In a conventional system such confirmation is requested at the STB and when accepted the switching will be done within the STB only, and if the TV is not powered or is displaying another interface, the TV and user will be unaware of these signals and no confirmation request will be displayed to the user.

However, as per the proposed method of an embodiment, the confirmation will be requested in the STB and will be sent to the TV as a Switch-To-This-Interface confirmation request (STTICR), which will cause the TV to display the confirmation request. The user input of which will be stored from TV and stored in STB.

If the confirmation is accepted:
In the conventional method, even if a confirmation were received and the STB switched to the particular channel, the TV's active interface would not be the STB, thus, no display of the programme would occur. In effect the user will not be notified at any point, and the reminder was obsolete.

As per the proposed method, when a STTICR is accepted, TV will send a STTICA signal (confirmation accepted) to the STB. Then at the time xx:xx hours, the programme will be switched in the STB and it will send a STTI message to TV to switch the interface automatically. By doing this, our favourite programmes on the TVs will not be lost unseen.

For this proposed method, both the Television systems & Set Top Boxes are enabled to understand & generate the STTI & STTICR and STTICA signals based on their direction. This can be done by a Firmware update for both the televisions & STB devices to make it work on the existing systems.

The above has the advantage that the user is unlikely to miss a programme or an activity with the family/friends, even when the user is very much interested in the current display of another connected port.

In some embodiments the bi-direction communication between the external source and TV provides the user with choice via GUI not only to ask for confirmation to switch the displayed signal source but also providing a snooze choice and/or a choice of changing the original reminder to a different reminder, (i.e. reminder for a programme when it is re-telecasted, later time, etc.,), the changes are then relayed back to the source (set-top-box, DVR, etc.,) which make these changes and sends a further STTICR at a later point. This solution provide a dynamic & more user friendly way to Switch between different source (Set-top-box, DVR, Videogame console, etc.,)

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method performed at a processing device, said processing device being configured to output signals to a display device that is configured to display signals received from one of a plurality of processing devices, said method comprising:
when not currently outputting signals to said display device, determining that an output signal in which a user of said display device has indicated an interest is to be available to be output by said processing device; and
transmitting a notifying signal to said display device, said notifying signal instructing said display device to switch to displaying signals received at an input receiving signals from said processing device.

2. A method according to claim 1, comprising:
at a predetermined time before said output signal is to be available, transmitting a confirmation request instructing said display to display a request for confirmation from said user as to whether said display device should switch to display said output signal that is to be available; and
in response to receiving a confirmation from said display device performing said determining and transmitting steps of claim 1.

3. A method according to claim 1, wherein said notifying signal includes a confirmation request instructing said display to display a request for confirmation from said user as to whether said display device should switch to display said available output signal, said notifying signal instructing said display device to switch to said input receiving signals from said processing device only on receipt of confirmation of said switch from said user.

4. A method according to any preceding claim, comprising a further step of outputting said available output signal to said display device.

5. A method according to any preceding claim, said method comprising an initial step of receiving a reminder request from said user requesting notification of said availability of said output signal in which said user is interested.

6. A method according to claim 5, wherein said processing device comprises a device for receiving a plurality of television programmes and for outputting a selected programme to said display, and
said reminder request comprises a reminder request for a television programme that is scheduled to be broadcast at a predetermined time.

7. A method according to any one of claims 1 to 4, wherein said processing device is configured to download data that is to be output and said determining step comprises determining that said download is complete.

8. A method performed at a display device configured to display signals received from one of a plurality of processing devices, said method comprising:
receiving, from one of said plurality of processing devices that said display device is not currently displaying a signal from, a notifying signal notifying said display device of an availability of a signal in which a user of said display device has indicated an interest; and
in response to said notifying signal performing at least one of:
switching an input interface at said display device to said one of said plurality of processing devices from which said notifying signal was received; and
displaying a request for confirmation from said user as to whether said display device should switch inputs to display said available output signal.

9. A method according to claim 8, wherein said notifying signal comprises a switch to interface with confirmation signal and said method comprises:
performing said displaying step and receiving an input from said user; and
forwarding said received user input to said one of said plurality of processing devices.

10. A method according to claim 9, comprising a further step of in response to said received user input indicating confirmation performing said switching step.

11. A computer program which when executed by a computer is operable to control said computer to performs steps according to said method of any one of claims 1 to 10.

12. A processing device for outputting signals for display at a display device configured to display signals received from one of a plurality of processing devices, said processing device comprising:
output circuitry for outputting signals to said display device;
input circuitry for receiving user inputs indicating an interest in at least one signal to be output to said display device by said processing device;
determining circuitry configured when said processing device is not currently outputting signals to said display device, to determine when an output signal in which said user of said display device has indicated an interest is to be available to be output by said processing device; wherein
said output circuitry is configured to respond to said determining circuitry determining an availability of said output signal to transmit a notifying signal to said display device notifying said display device of said availability of said output signal.

13. A processing device according to claim 12, wherein said processing device comprises one of a set top box, a gaming console, a computing device, and a digital multimedia player.

14. A display device configured to display signals received from one of a plurality of processing devices, said display device comprising:
an input for receiving a notifying signal from one of said plurality of processing devices that said display device is not currently displaying a signal from, said notifying signal notifying said display device of an availability of a signal in which a user of said display device has indicated an interest; and
control logic configured in response to said notifying signal to send a control signal to at least one of switching logic and display logic;
said switching logic being logic configured to respond to said control signal by switching an input interface at said display device to receive a signal from said one of said plurality of processing devices; and
said display logic being configured to respond to said control signal to display a request for confirmation from said user as to whether said display device should switch inputs to display said available output signal.

15. A display device according to claim 14, further comprising
user input logic for receiving a user input in response to said display of said confirmation request; and
transmission logic configured to transmit said user input to said one of said plurality of processing devices.

## Amended claims

### Amended claims in accordance with Rule 137(2) EPC.

**1.** said reminder request comprises a reminder request for a television programme that is scheduled to be broadcast at a predetermined time.

**7.** A method according to any one of claims 1 to 4, wherein said processing device is configured to download data that is to be output and said determining step comprises determining that said download is complete.

**8.** A method performed at a display device configured to display signals received from one of a plurality of processing devices, said method comprising:
receiving, from one of said plurality of processing devices that said display device is not currently displaying a signal from, a notifying signal notifying said display device of an availability of a signal in which a user of said display device has indicated an interest; and
in response to said notifying signal performing at least one of:
switching an input interface at said display device to said one of said plurality of processing devices from which said notifying signal was received;
and
displaying a request for confirmation from said user as to whether said display device should switch inputs to display said available output signal.

**9.** A method according to claim 8, wherein said notifying signal comprises a switch to interface with confirmation signal and said method comprises:
performing said displaying step and receiving an input from said user; and
forwarding said received user input to said one of said plurality of processing devices.

**10.** A method according to claim 9, comprising in response to said received user input indicating confirmation performing said switching step.

**11.** A computer program which when executed by a computer is operable to control said computer to performs steps according to said method of any one of claims 1 to 10.

**12.** A processing device for outputting signals for display at a display device configured to display signals received from one of a plurality of processing devices, said processing device comprising:
output circuitry for outputting signals to said display device;
